# EUROPEAN PATENT SPECIFICATION

(11) **EP 1 473 788 B1**
(45) Date of publication and mention of the grant of the patent: **15.10.2008**
(21) Application number: 03737442.8
(22) Date of filing: 29.01.2003
(51) Int. Cl.: H01M 4/06, H01M 4/50, H01M 4/52, H01M 6/04

(54) **ALKALINE BATTERY**
ALKALISCHE BATTERIE
BATTERIE ALCALINE& xA;

(30) Priority: 07.02.2002 JP 2002030515
(43) Date of publication of application: 03.11.2004
(73) Proprietor: MATSUSHITA ELECTRIC INDUSTRIAL CO., LTD., Kadoma-shi, Osaka 571-8501 (JP)
(72) Inventor: NOYA, Shigeto, Neyagawa-shi, Osaka 572-0048 (JP); MUKAI, Yasuo, Room 205, Moriguchi-shi, Osaka 570-0004 (JP); FUJIWARA, Michiko,, Osaka 571-0076 (JP); MOTOTANI, Yuji, Yawata-shi, Kyoto 614-8057 (JP); IZUMI, Hidekatsu, Katano-shi, Osaka 576-0021 (JP)
(74) Representative: Price, Paul Anthony King
(86) International application number: PCT/JP2003/000860
(87) International publication number: WO 2003/067689

(56) References cited:
- EP-A- 1 184 919
- WO-A-00/21151
- WO-A-00/37714
- JP-A- 5 151 957
- JP-A- 7 183 032
- JP-A- 2002 343 346
- JP-A- 2002 348 693

## Description

### Technical Field

The present invention relates to an improvement of an alkaline battery that utilizes manganese dioxide and nickel oxyhydroxide as positive electrode active materials.

### Background Art

Alkaline batteries such as alkaline dry batteries comprise, for example, a positive electrode case which also serves as a positive electrode terminal, a cylindrical positive electrode mixture which is closely fitted to the inner face of the case, and a gelled negative electrode which is disposed in a hollow space of the positive electrode mixture with a separator interposed therebetween.

With a recent increase in load of equipment in which alkaline batteries are used, there is an increasing demand for alkaline batteries having excellent heavy load discharge performance. Thus, mixing nickel oxyhydroxide into the positive electrode mixture has been examined to improve heavy load discharge performance of alkaline batteries (e.g., Japanese Laid-Open Patent Publication No. 2001-15106).

However, alkaline batteries including manganese dioxide and nickel oxyhydroxide as positive electrode active materials have inferior storage performance to alkaline batteries including no nickel oxyhydroxide, and have large self-discharge especially when stored at high temperatures. Thus, after a long-term storage, the alkaline batteries including nickel oxyhydroxide have such a problem that the heavy load discharge performance thereof is inferior to that of the alkaline batteries including no nickel oxyhydroxide.

The normal electrode potential of nickel oxyhydroxide is 0.49 V relative to a normal hydrogen electrode (NHE (25°C)), and the normal electrode potential of manganese dioxide is 0.15 V relative to an NHE (25°C).

Also, the potential of nickel oxyhydroxide in a KOH aqueous solution (KOH concentration 40 wt%) is 370 to 410 mV relative to an Hg/HgO electrode, and the potential of electrolytic manganese dioxide in a KOH aqueous solution (KOH concentration 40 wt%) is, for example, 240 to 270 mV relative to an Hg/HgO electrode. Electrolytic manganese dioxide having such a potential is generally used in conventional alkaline batteries including no nickel oxyhydroxide (Japanese Laid-Open Patent Publication No. Hei 7-183032).

The potential of manganese dioxide is designed in consideration of storage characteristics of batteries. When the potential of manganese dioxide is high, the potential difference between a positive electrode and a negative electrode including zinc as an active material becomes large. This allows the oxidation reaction of manganese dioxide to proceed readily even while the battery is not used, thereby inviting deterioration in storage characteristics. Meanwhile, when the potential difference between the negative electrode and the positive electrode becomes large, the open circuit voltage of the battery becomes high. However, a major improvement in voltage maintaining characteristics and high rate discharge characteristics is not observed. Therefore, manganese dioxide having a potential of approximately 250 mV which is not too high and not too low has become predominant.

It is known that the potential of manganese dioxide is changed, for example, by controlling the conditions of electrolysis which is performed to obtain the potential (Japanese Laid-Open Patent Publication No. 2002-348693).

### Disclosure of Invention

An object of the present invention is to provide an alkaline battery capable of retaining heavy load discharge performance even after a long-term storage at high temperatures.

An alkaline battery in accordance with the present invention comprises: a positive electrode mixture comprising manganese dioxide and nickel oxyhydroxide as active materials; a negative electrode comprising zinc as an active material; and an alkaline electrolyte, and is characterized in that the potential of the manganese dioxide relative to a mercury/mercury oxide electrode (Hg/HgO electrode) in a potassium hydroxide aqueous solution having a KOH concentration of 40 wt% is 270 mV or higher.

With respect to the total amount of the manganese dioxide and the nickel oxyhydroxide, it is preferable that the content of the manganese dioxide be from 20 to 90 wt% and that the content of the nickel oxyhydroxide be from 10 to 80 wt%.

As the manganese dioxide, it is possible to use electrolytic manganese dioxide of which potential is heightened by cleaning with an aqueous solution of sulfuric acid.

The concentration of sulfuric acid in the aqueous solution of sulfuric acid is preferably 10 wt% or higher.

### Brief Description of Drawings

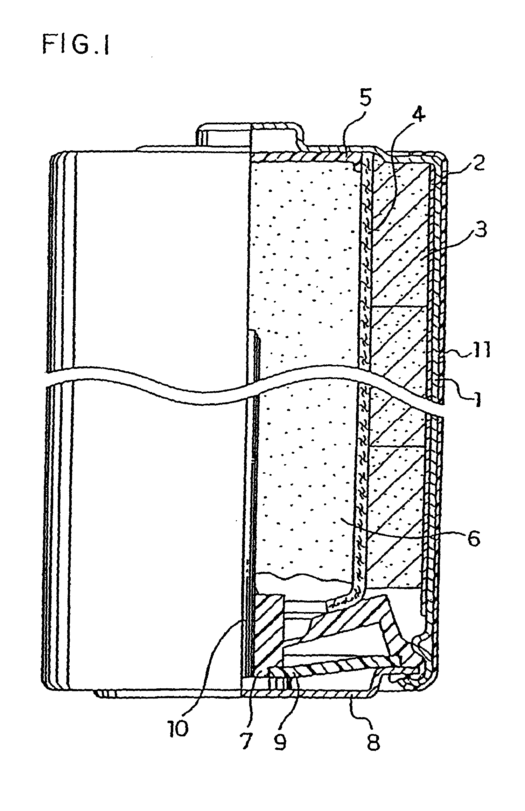

FIG. 1 is a partially sectional front view of an example of an alkaline battery in accordance with the present invention.

### Best Mode for Carrying Out the Invention

One of the reasons for the self-discharge of alkaline batteries including manganese dioxide and nickel oxyhydroxide is that the potential difference between manganese dioxide and nickel oxyhydroxide causes formation of a local battery consisting of manganese dioxide and nickel oxyhydroxide in a positive electrode mixture in which an oxidation reduction reaction proceeds.

Thus, in order to make such batteries after storage retain heavy load discharge characteristics, the potential difference between manganese dioxide and nickel oxyhydroxide needs to be reduced to avoid deterioration of nickel oxyhydroxide caused by the formation of the local battery. For this purpose, it is effective to heighten the potential of manganese dioxide and bring it close to the potential of nickel oxyhydroxide.

However, manganese dioxide having a relatively low potential of approximately 250 mV relative to an Hg/HgO electrode in a KOH aqueous solution (KOH concentration 40 wt%) has conventionally been used also in alkaline batteries to which nickel oxyhydroxide is added to improve heavy load discharge performance. This is presumably because the potential of manganese dioxide has been selected based on the above-described technically common knowledge about conventional alkaline batteries including no nickel oxyhydroxide without sufficient awareness that the formation of the local battery causes deterioration of nickel oxyhydroxide.

In order to suppress the deterioration of nickel oxyhydroxide due to the formation of the local battery, it is effective to use manganese dioxide having a potential of 270 mV or higher relative to an Hg/HgO electrode in a KOH aqueous solution (KOH concentration 40 wt%). This is because the use of such manganese dioxide makes it possible to reduce the potential difference between the nickel oxyhydroxide generally used in alkaline batteries and the manganese dioxide down to a level at which the above-described oxidation reduction reaction is suppressed.

The manganese dioxide having a potential of 270 mV or higher relative to an Hg/HgO electrode in a KOH aqueous solution (KOH concentration 40 wt%) may be prepared, for example, by electrolyzing a solution containing divalent manganese ions. For example, in performing electrolysis using an acidic manganese sulfate solution, the potential of manganese dioxide is varied by controlling electrolytic potential, manganese ion concentration, sulfuric acid concentration, current density, solution temperature, etc (Japanese Laid-Open Patent Publication No. 2002-348693). Thus, one with ordinary skill in the art could produce electrolytic manganese dioxide having a desired potential by properly selecting electrolytic conditions.

Also, when manganese dioxide having low potential is cleaned with sulfuric acid, lower level manganese oxides on the surfaces of manganese dioxide particles are dissolved and removed, so that manganese dioxide having higher potential can be obtained.

For example, electrolytic manganese dioxide is mixed with an aqueous solution of sulfuric acid to produce slurry. The concentration of manganese dioxide in the produced slurry is preferably from 100 to 300 g/L. The sulfuric acid concentration of the aqueous solution of sulfuric acid used therein is preferably 5 wt% or higher and more preferably 10 wt% or higher. Also, the electrolytic manganese dioxide used therein normally has a purity of 91 to 92 % with inclusion of impurities such as lower level manganese oxides, water and sulfate.

Subsequently, the slurry is stirred for 5 to 10 hours while the temperature thereof is maintained at 45°C to 60°C. Thereafter, manganese dioxide is filtered out, washed with water, and neutralized with alkali if necessary and washed again. By these steps, the potential of manganese dioxide is heightened.

The positive electrode mixture is prepared by mixing manganese dioxide with heightened potential and nickel oxyhydroxide together with a conductive material such as graphite and an alkaline aqueous solution.

The average particle size of manganese dioxide is preferably from 30 to 50 µm, and the average particle size of nickel oxyhydroxide is preferably from 5 to 30 µm.

Further, in order to obtain an alkaline battery having excellent discharge performance at initial stage and after high temperature storage, it is preferable that with respect to the total amount of manganese dioxide and nickel oxyhydroxide, the content of manganese dioxide be from 20 to 90 wt% and that the content of nickel oxyhydroxide be from 10 to 80 wt%.

Also, when the content of manganese dioxide is from 20 to 80 wt% and the content of nickel oxyhydroxide is from 20 to 80 wt%, the discharge performance of the alkaline battery at initial stage is further improved.

### Examples

An alkaline battery of AA size produced in the following examples and comparative examples will be described with reference to FIG. 1. It should be noted that FIG. 1 merely illustrates an example of the alkaline battery of the present invention and is not to be construed as limiting the present invention.

In FIG. 1, a positive electrode case 1 is made of steel plated with nickel. A graphite coating film 2 is formed on the inner face of the positive electrode case 1. A plurality of positive electrode mixture pellets 3 in a short cylindrical shape are inserted into the positive electrode case 1 so as to intimately contact the inner face of the case 1.

A separator 4 is provided in the hollow space of the positive electrode mixture pellets 3, and an insulating cap 5 is provided in the central part of the bottom of the case 1. The separator 4 and the positive electrode mixture pellets 3 are impregnated with an alkaline electrolyte.

Inside the separator 4 is charged a gelled negative electrode 6. A negative electrode current collector 10 is inserted into the central part of the gelled negative electrode 6. The negative electrode current collector 10 is pressed into a central hole of a resin sealing plate 7, and is integrally welded, at the head thereof, to a bottom plate 8. The bottom plate 8 also functions as a negative electrode terminal. An insulating washer 9 is caught by the sealing plate 7.

The opening end of the positive electrode case 1 is crimped onto the outer edge of the bottom plate 8 with the outer edge of the resin sealing plate 7 interposed therebetween. Thus, the opening of the positive electrode case 1 is sealed. The outer surface of the positive electrode case 1 is covered with a jacket label 11.

### Example 1

### (a) Process of heightening potential of manganese dioxide

HH-PF, electrolytic manganese dioxide for alkaline batteries manufactured by Tosoh Corporation, was used. The physical properties of HH-PF are shown below.
- MnO₂ purity: 91% or higher
- Average particle size obtained by a micro-track method: about 40 µm
- pH: 3.0 to 4.0
- Electrode potential relative to an Hg/HgO electrode in a KOH aqueous solution (KOH concentration 40 wt%): 254 mV

This electrolytic manganese dioxide was mixed with an aqueous solution of sulfuric acid having a sulfuric acid concentration of 5 wt% to produce slurry of 60°C. The concentration of manganese dioxide in the slurry was 100 g/L.

Subsequently, the slurry was stirred for one hour while it was maintained at 60°C, and thereafter, manganese dioxide was filtered out and washed with water. Then, the washed manganese dioxide was washed with an aqueous solution of sodium hydroxide to neutralize the remaining sulfuric acid and washed again with water.

This produced manganese dioxide "a" whose potential relative to an Hg/HgO electrode in a KOH aqueous solution (KOH concentration 40 wt%) was 272 mV.

### (b) Preparation of positive electrode mixture

The Manganese dioxide with heightened potential, nickel oxyhydroxide (average particle size 10 µm), and graphite (average particle size 20 µm) were mixed in a weight ratio of 50:50:5. Further, 1 part by weight of an alkaline electrolyte per 100 parts by weight of the total of manganese dioxide and nickel oxyhydroxide was added to the above-described mixture, and the resultant mixture was stirred with a mixer and granulated to have a certain particle size. Therein, the alkaline electrolyte used was an aqueous solution of potassium hydroxide having a KOH concentration of 40 wt%. The particles thus obtained were pressurized into a hollow cylindrical shape to mold positive electrode mixture pellets A.

### (c) Preparation of gelled negative electrode

100 parts by weight of zinc powder as a negative electrode active material, 1.5 parts by weight of sodium polyacrylate as a gelling agent, and 50 parts by weight of an alkaline electrolyte (an aqueous solution of potassium hydroxide having a KOH concentration of 40 wt%) were mixed with each other to produce a gelled negative electrode.

### (d) Production of alkaline battery

A plurality of positive electrode mixture pellets A thus obtained were charged into a positive electrode case, and the pellets A were pressed again inside the case so as to intimately contact the inner face of the case. Subsequently, a separator was fitted to the inner face of the hollow space of the positive electrode mixture pellets A, and an insulating cap was provided in the central part of the bottom of the case. Then, an alkaline electrolyte (an aqueous solution of potassium hydroxide having a KOH concentration of 40 wt%) was injected into the case to impregnate the separator and the positive electrode mixture pellets A. Next, the gelled negative electrode was charged into the hollow space surrounded by the separator, and a predetermined negative electrode current collector was inserted into the central part of the gelled negative electrode to seal the opening of the case. Thereafter, by performing a predetermined crimping operation, an alkaline battery of AA size as illustrated in FIG. 1 was assembled. This alkaline battery was named as battery A.

### (e) Evaluation of alkaline battery

Batteries at the initial stage and after a 7-day storage at 60°C were continuously discharged at a constant electric power of 1000 mW at 20°C, and discharge duration was measured until the battery voltage reached to a cut-off voltage of 0.9 V. Also, the ratio (%) of the discharge duration of the battery after the storage to the discharge duration of the battery at the initial stage was obtained.

### Example 2

The potential of manganese dioxide was heightened in the same manner as in Example 1 except that the concentration of sulfuric acid in the aqueous solution of sulfuric acid was changed from 5 wt% to 10 wt%, 15 wt%, 20 wt% and 30 wt%. This produced electrolytic manganese dioxide "b", "c", "d" and "e" whose potentials relative to an Hg/HgO electrode in a KOH aqueous solution (KOH concentration 40 wt%) were 281 mV, 288 mV, 297 mV and 312 mV, respectively.

Subsequently, positive electrode mixture pellets B, C, D and E were produced in the same manner as in Example 1 except for the use of the electrolytic manganese dioxide "b", "c", "d" and "e".

Thereafter, batteries B, C, D and E were produced in the same manner as in Example 1 except for the use of the positive electrode mixture pellets B, C, D and E, and were evaluated in the same manner as the battery A.

### Comparative Example 1

Positive electrode mixture pellets F were produced in the same manner as in Example 1 except that HH-PF, electrolytic manganese dioxide for alkaline batteries manufactured by Tosoh Corporation, was used without any treatment. Then, a battery F was produced in the same manner as in Example 1 except for the use of the positive electrode mixture pellets F and was evaluated in the same manner as the battery A.

### Example 3

HH-TF, electrolytic manganese dioxide for alkaline batteries manufactured by Tosoh Corporation, was used. The physical properties of HH-TF are shown below.
- MnO₂ purity: 91% or higher
- Average particle size obtained by a micro-track method: about 40 µm
- pH: 3.0 to 4.0
- Potential relative to an Hg/HgO electrode in a KOH aqueous solution (KOH concentration 40 wt%): 275 mV

The potential of this electrolytic manganese dioxide was heightened in the same manner as in Example 1, thereby producing manganese dioxide "g" whose potential relative to an Hg/HgO electrode in a KOH aqueous solution (KOH concentration 40 wt%) was 283 mV.

Subsequently, positive electrode mixture pellets G were produced in the same manner as in Example 1 except for the use of the electrolytic manganese dioxide "g".

Thereafter, a battery G was produced in the same manner as in Example 1 except for the use of the positive electrode mixture pellets G and was evaluated in the same manner as the battery A.

Table 1 shows potentials of the manganese dioxide "a" to "g" and discharge durations of the batteries A to G. It is noted that each discharge duration is an average value of ten batteries which is expressed as a relative value obtained by defining the discharge duration at the initial stage of the battery F in Comparative Example 1 as 100.

**Table 1**

| | Battery No. | Sulfuric acid concentration (wt%) | Electrode potential of manganese dioxide | Discharge duration | | (B/A) × 100 (%) |
|---|---|---|---|---|---|---|
| | | | | Initial stage(A) | After storage(B) | |
| Example 1 | A | 5 | 272 | 102 | 74 | 73 |
| Example 2 | B | 10 | 281 | 103 | 77 | 75 |
| | C | 15 | 288 | 102 | 81 | 79 |
| | D | 20 | 297 | 100 | 81 | 81 |
| | E | 30 | 312 | 97 | 79 | 81 |
| Example 3 | G | 5 | 283 | 104 | 82 | 79 |
| Comparative example 1 | F | 5 | 254 | 100 | 71 | 71 |
| (Cut-off voltage 0.9V) | | | | | | |

As is clear from Table 1, the batteries A to E, which used manganese dioxide having a potential of 270 mV or higher, had an improved discharge performance after high temperature storage in comparison with the battery F, which used manganese dioxide having a potential lower than 270 mV.

In the process of heightening the potential of electrolytic manganese dioxide, the higher the sulfuric acid concentration of the aqueous solution of sulfuric acid, the higher the potential of the resultant manganese dioxide. Also, the higher the sulfuric acid concentration of the aqueous solution of sulfuric acid, the higher the ratio of the discharge duration of the battery after storage to the discharge duration of the battery at the initial stage.

Also, although the reason is not yet clear, the discharge durations at the initial stage of the batteries A to D were longer than that of the battery F while the discharge duration of the battery E was shorter.

Next, in the following examples and comparative examples, the content of nickel oxyhydroxide with respect to the total amount of manganese dioxide and nickel oxyhydroxide was examined.

### Comparative Example 2

Positive electrode mixture pellets were produced in the same manner as in Example 1 except that HH-PF, electrolytic manganese dioxide for alkaline batteries manufactured by Tosoh Corporation, was used without any treatment and that the contents of manganese dioxide and nickel oxyhydroxide in the positive electrode mixture were varied as shown in Table 2, and batteries 1 to 8 were assembled. Then, the batteries 1 to 8 were evaluated in the same manner as the battery A of Example 1.

Table 2 shows discharge durations of the batteries 1 to 8. It is noted that each discharge duration is an average value of ten batteries which is expressed as a relative value obtained by defining the discharge duration at the initial stage of the battery 1 as 100.

**Table 2**

| Battery No. | Content in positive electrode (part by weight) | | | Discharge duration | | (B/A) × 100(%) |
|---|---|---|---|---|---|---|
| | Manganese dioxide | Nickel oxyhydroxide | Graphite | Initial stage(A) | After storage(B) | |
| 1 | 100 | 0 | 5 | 100 | 92 | 92 |
| 2 | 95 | 5 | 5 | 102 | 89 | 87 |
| 3 | 90 | 10 | 5 | 107 | 91 | 85 |
| 4 | 80 | 20 | 5 | 116 | 94 | 81 |
| 5 | 50 | 50 | 5 | 138 | 98 | 71 |
| 6 | 20 | 80 | 5 | 147 | 90 | 61 |
| 7 | 10 | 90 | 5 | 157 | 83 | 53 |
| 8 | 0 | 100 | 5 | 161 | 79 | 49 |
| (Cut-off voltage 0.9V) | | | | | | |

### Example 4

HH-PF, electrolytic manganese dioxide for alkaline batteries manufactured by Tosoh Corporation, was used. The potential of this electrolytic manganese dioxide was heightened in the same manner as in Example 1 except for the use of an aqueous solution of sulfuric acid having a sulfuric acid concentration of 15 wt%, thereby producing manganese dioxide whose potential relative to an Hg/HgO electrode in a KOH aqueous solution (KOH concentration 40 wt%) was 288 mV.

Positive electrode mixture pellets were produced in the same manner as in Example 1 except that the manganese dioxide thus obtained was used and that the contents of manganese dioxide and nickel oxyhydroxide in the positive electrode mixture were varied as shown in Table 3, and batteries 9 to 14 were assembled. Then, the batteries 9 to 14 were evaluated in the same manner as the battery A of Example 1.

Table 3 shows discharge durations of the batteries 9 to 14. It is noted that each discharge duration is an average value of ten batteries which is expressed as a relative value obtained by defining the discharge duration at the initial stage of the battery 1 in Comparative Example 2 as 100.

**Table 3**

| Battery No. | Content in positive electrode (part by weight) | | | Discharge duration | | (B/A) × 100(%) |
|---|---|---|---|---|---|---|
| | Manganese dioxide | Nickel oxyhydroxide | Graphite | Initial stage(A) | After storage(B) | |
| 9 | 95 | 5 | 5 | 105 | 93 | 89 |
| 10 | 90 | 10 | 5 | 111 | 101 | 91 |
| 11 | 80 | 20 | 5 | 120 | 104 | 87 |
| 12 | 50 | 50 | 5 | 141 | 111 | 79 |
| 13 | 20 | 80 | 5 | 148 | 101 | 68 |
| 14 | 10 | 90 | 5 | 156 | 86 | 55 |
| (Cut-off voltage 0.9V) | | | | | | |

### Example 5

HH-TF, electrolytic manganese dioxide for alkaline batteries manufactured by Tosoh Corporation, was used. The potential of this electrolytic manganese dioxide was heightened in the same manner as in Example 1, thereby producing manganese dioxide whose potential relative to an Hg/HgO electrode in a KOH aqueous solution (KOH concentration 40 wt%) was 283 mV.

Positive electrode mixture pellets were produced in the same manner as in Example 1 except that the manganese dioxide thus obtained was used and that the contents of manganese dioxide and nickel oxyhydroxide in the positive electrode mixture were varied as shown in Table 4, and batteries 15 to 20 were assembled. Then, the batteries 15 to 20 were evaluated in the same manner as the battery A of Example 1.

Table 4 shows discharge durations of the batteries 15 to 20. It is noted that each discharge duration is an average value of ten batteries which is expressed as a relative value obtained by defining the discharge duration at the initial stage of the battery 1 in Comparative Example 2 as 100.

**Table 4**

| Battery No. | Content in positive electrode (part by weight) | | | Discharge duration | | (B/A) × 100(%) |
|---|---|---|---|---|---|---|
| | Manganese dioxide | Nickel oxyhydroxide | Graphite | Initial stage(A) | After storage(B) | |
| 15 | 95 | 5 | 5 | 105 | 93 | 89 |
| 16 | 90 | 10 | 5 | 113 | 104 | 92 |
| 17 | 80 | 20 | 5 | 124 | 109 | 88 |
| 18 | 50 | 50 | 5 | 144 | 114 | 79 |
| 19 | 20 | 80 | 5 | 150 | 105 | 70 |
| 20 | 10 | 90 | 5 | 157 | 86 | 55 |
| (Cut-off voltage 0.9V) | | | | | | |

As is clear from Tables 2 to 4, regardless of the content of nickel oxyhydroxide, the discharge performances after high temperature storage of the batteries comprising manganese dioxide having a potential of 270 mV or higher were improved in comparison with the batteries comprising manganese dioxide having a potential lower than 270 mV.

The improvements in storage characteristics were particularly remarkable when the content of manganese dioxide with respect to the total amount of manganese dioxide and nickel oxyhydroxide was from 20 to 90 wt% and the content of nickel oxyhydroxide was from 10 to 80 wt%.

It is noted that as the method of heightening the potential of electrolytic manganese dioxide, other methods than the method described in the examples of the present invention may be employed.

### Industrial Applicability

According to the present invention, it is possible to suppress self-discharge reaction of an alkaline battery comprising manganese dioxide and nickel oxyhydroxide as active materials and retain heavy load discharge performance of the alkaline battery even after storage.

## Claims

1. An alkaline battery comprising: a positive electrode mixture comprising manganese dioxide and nickel oxyhydroxide as active materials; a negative electrode comprising zinc as an active material; and an alkaline electrolyte, **characterized in that** the potential of said manganese dioxide relative to a mercury/mercury oxide electrode in a potassium hydroxide aqueous solution having a KOH concentration of 40 wt% is 270 mV or higher.

2. The alkaline battery in accordance with claim 1, wherein with respect to the total amount of said manganese dioxide and said nickel oxyhydroxide, the content of said manganese dioxide is from 20 to 90 wt% and the content of said nickel oxyhydroxide is from 10 to 80 wt%.

3. The alkaline battery in accordance with claim 1, wherein said manganese dioxide is electrolytic manganese dioxide whose potential is heightened by cleaning with an aqueous solution of sulfuric acid.

4. The alkaline battery in accordance with claim 3, wherein the concentration of sulfuric acid in said aqueous solution of sulfuric acid is 10 wt% or higher.

## Patentansprüche

1. Alkalische Batterie enthaltend:
eine Mangandioxid und Nickel-Oxyhydroxid als aktives Material enthaltende positive Elektrodenmischung; eine Zink als ein aktives Material enthaltende negative Elektrode; und einen alkalischen Elektrolyt, **dadurch gekennzeichnet, dass** das Potential des Mangandioxids relativ zur einer Quecksilber/Quecksilberoxid Elektrode in einer wässrigen Lösung von Kaliumhydoxid mit einer KOH Konzentration von 40 Gew.-% 270 mV oder höher ist.

2. Alkalische Batterie nach Anspruch 1, wobei im Bezug auf die Gesamtmenge des Mangandioxids und des Nickel-Oxyhydroxyds der Gehalt des Mangandioxids von 20 bis 90 Gew.-% und der Gehalt des Nickel-Oxyhydroxids von 10 bis 80 Gew.-% ist.

3. Alkalische Batterie nach Anspruch 1, wobei das Mangandioxid ein elektrolytisches Mangandioxid ist, dessen Potential durch Reinigen mit einer wässrigen Lösung von Schwefelsäure erhöht ist.

4. Alkalische Batterie nach Anspruch 3, wobei die Konzentration von Schwefelsäure in der wässrigen Lösung von Schwefelsäure 10 Gew.-% oder höher ist.

## Revendications

1. Batterie alcaline comprenant: un mélange d'électrodes positives comprenant du dioxyde de manganèse et de l'oxyhydroxyde de nickel en tant que matériaux actifs; une électrode négative comprenant du zinc en tant que matériau actif ; et un électrolyte alcalin, **caractérisée en ce que** le potentiel dudit dioxyde de manganèse par rapport à une électrode de mercure/ une électrode d'oxyde de mercure dans une solution aqueuse d'hydroxyde de potassium ayant une concentration en KOH de 40 % en poids est de 270 mV ou plus.

2. Batterie alcaline selon la revendication 1, dans laquelle la teneur dudit dioxyde de manganèse est de 20 à 90 % en poids et la teneur dudit oxyhydroxyde de nickel est de 10 à 80 % en poids par rapport à la quantité totale dudit dioxyde de manganèse et dudit oxyhydroxyde de nickel.

3. Batterie alcaline selon la revendication 1, dans laquelle ledit dioxyde de manganèse est un dioxyde de manganèse électrolytique dont le potentiel est accru par un nettoyage avec une solution aqueuse d'acide sulfurique.

4. Batterie alcaline selon la revendication 3, dans laquelle la concentration en acide sulfurique dans ladite solution aqueuse d'acide sulfurique est 10 % en poids ou plus.
